# EUROPÄISCHE PATENTSCHRIFT

(11) **EP 3 008 365 B1**
(45) Veröffentlichungstag und Bekanntmachung des Hinweises auf die Patenterteilung: **10.07.2019**
(21) Anmeldenummer: 14724308.3
(22) Anmeldetag: 09.05.2014
(51) Int. Cl.: F16K 5/06, F16K 47/02, F16K 5/12

(54) **REGELHAHN**
CONTROL VALVE
ROBINET DE RÉGULATION

(30) Priorität: 12.06.2013 CH 11032013
(43) Veröffentlichungstag der Anmeldung: 20.04.2016
(73) Patentinhaber: Belimo Holding AG, 8340 Hinwil (CH)
(72) Erfinder: KELLER, Urs, CH-8340 Hinwil (CH); JUKES, Andrew, James, CH-8623 Wetzikon (CH); CICERCHIA, Giuseppe, CH-8953 Dietikon (CH)
(74) Vertreter: Rentsch Partner AG
(86) Internationale Anmeldenummer: PCT/EP2014/001248
(87) Internationale Veröffentlichungsnummer: WO 2014/198367

(56) Entgegenhaltungen:
- EP-A1- 0 309 678
- EP-A1- 1 439 339
- WO-A1-01/33120
- WO-A1-94/07063
- WO-A1-2005/040655
- WO-A1-2010/117361
- WO-A1-2012/118452
- DE-A1- 19 940 471
- DE-B1- 2 732 672
- GB-A- 669 103
- JP-A- 2010 014 280
- US-A- 3 403 887
- US-A- 3 591 129
- US-A- 4 774 984
- US-A- 5 551 467
- US-A- 6 021 812
- US-A- 6 039 304
- US-A- 6 109 591

## Beschreibung

### TECHNISCHES GEBIET

Die vorliegende Erfindung bezieht sich auf das Gebiet der Strömungsmechanik. Sie betrifft einen Regelhahn für hydraulische und/oder pneumatische Anwendungen gemäss dem Oberbegriff des Anspruchs 1.

### STAND DER TECHNIK

Aus der Druckschrift US 6,039,304 A ist es bekannt, bei Kugelhähnen zur Erzeugung einer vorbestimmten Ventilcharakteristik eine zusätzliche Scheibe mit einer speziell geformten Öffnung einzusetzen, die sich mit einer Seite an den kugelförmigen Ventilkörper anpasst.

Es ist aber auch bereits vorgeschlagen worden, den kugelförmigen Ventilkörper selbst zur Festlegung einer vorbestimmten Ventilcharakteristik heranzuziehen.

So ist es aus der Druckschrift DE 27 32 672 B1 bekannt, bei einem Kugelhahn zur Mengen- und/oder Drucksteuerung oder -regelung in die Durchgangsbohrung eines Kugelkükens ein Steuerelement einzusetzen, welches die Form einer zylindrischen Hülse hat, deren eines Ende offen ist, während im anderen Ende die Drosselungsöffnung gebildet ist, deren Querschnittsform und Größe von der gewünschten Drosselcharakteristik abhängig ist und dementsprechend sehr unterschiedlich ausgestaltet sein kann.

Die Druckschrift DE 199 40 471 A1 offenbart einen Kugelhahn zum Einbau in eine Rohrleitung, der ein einteiliges Gehäuse mit einer Kammer und mit zwei auf zwei Seiten der

Kammer angeordneten Anschlussbereichen zum Anschluss an den dazu passenden Rohrleitungsabschnitten umfasst, wobei in der Kammer eine Kugel zum Absperren bzw. zum Öffnen der Rohrleitung angeordnet ist. Die Kugel weist einen Durchgang von einer Eingangsöffnung zu einer Ausgangsöffnung auf, wobei die Eingangsöffnung und die Ausgangsöffnung mit unterschiedlich ausgebildeten Ausnehmungen ausgebildet sind. Hierdurch ergibt sich ein Kugelhahn, der die Strömung möglichst wenig reduziert und der eine lineare Kennlinie für den Durchfluss in einem möglichst grossen Stellwinkelbereich aufweist.

Die Druckschrift EP 0 309 678 A1 beschreibt einen Kugelhahn mit einem Kugelküken, das eine Durchgangsbohrung und eine am Ende der Durchgangsbohrung angeordnete Drosselöffnung aufweist. An das Kugelküken ist ein Boden angeformt, der die Drosselöffnung aufnimmt.

Aus der Druckschrift EP 1 439 339 A1 ist ein Kugelhahn bekannt, dessen Kugel einen Durchgang für das Fluid aufweist, wobei am einen Ende des Durchgangs eine Drosselöffnung ausgebildet ist, die in die Kugel durch Hochdruck-Strahlschneiden eingeschnitten ist.

Die Druckschrift US 3,403,887 A offenbart einen voll drehbaren Kugelhahn mit einem kugelförmigen Küken mit einem Strömungsdurchgang, der ein V-förmiges Endstück aufweist, um eine genauere Steuerung gerade beim Öffnen des Hahns zu ermöglichen. Einen ähnlichen Hahn zeigt auch die Druckschrift US 5,551,467 A.

In der Druckschrift US 6,021,812 A ist ein Kugelhahn beschrieben, der im Kugelküken eingangsseitig eine Hauptöffnung und eine Hilfsöffnung aufweist, und ausgangsseitig eine sektorielle Öffnung. Hiermit soll vor allem der Fliessbeginn beim Öffnen des Ventils beschleunigt werden.

Weitere Kugelhähne dieser Art sind Aus den Druckschriften US 6,109,591 A und WO 0133120 A1 bekannt.

Ebenfalls bekannt ist ein Kugelhahn, der als Schliesselement nur ein Kugelsegment aufweist (WO 2005/040655A1). In diesem Fall wird auf einen Durchlasskanal vollständig verzichtet, ohne dass jedoch dadurch hinsichtlich der Geräuschentwicklung irgendeine Verbesserung erreicht würde.

Nachteilig ist bei diesen Kugelhähnen, dass beim Durchgang der Strömung durch das Kugelküken Kavitationen und Geräusche erzeugt werden, die in bestimmten Einsatzfällen unerwünscht sind. Es sind daher bereits verschiedentlich Vorschläge gemacht worden, wie bei Kugelhähnen die Geräuschentwicklung reduziert oder ganz unterdrückt werden kann.

Die Druckschrift US 4,774,984 A schlägt einen geräuscharmen Hahn vor, beim dem eine Seite des Kükens als Gitter mit einer Vielzahl von kleinen Öffnungen ausgebildet ist, die den Durchgang durch das Küken mit einem ausserhalb des Kükens liegenden Bereich verbinden, wobei das Gitter in eine teilweise blockierende Position relativ zum Auslass gebracht wird, wenn der Hahn geöffnet wird. Das Gitter erzeugt einen Gegendruck, der das Aufplatzen und die Bildung von Kavitationsblasen unterdrückt.

Die Druckschrift WO 9407063 A1 zeigt einen geräuscharmen Hahn, bei dem auf der Eingangsseite des Durchgangs durch das Kugelküken ein erster Abweiser angeordnet ist. Ein zweiter Abweiser ist an der Vorderkante der oberen Hälfte des Hahns angeordnet. Die beiden Abweiser stellen einen kleinen Strömungswiderstand dar, wenn der Hahn voll geöffnet ist, zwingen jedoch die Strömung auf Umwege, wenn der Hahn teilweise geschlossen ist. Diese Umwege verhindern Wirbelbildung und reduzieren so Geräusch und Vibration.

Die Druckschrift JP 2010014280 A offenbart einen geräuscharmen Hahn, bei dem Geräusch und Kavitation in allen Öffnungen reduziert sind. Im Kugelküken sind senkrecht zueinander eine Durchgangsöffnung und ein Verbindungsgang angeordnet und miteinander verbunden. Des weiteren sind schlitzförmige Öffnungen vorgesehen, die am Ende der Durchgangsöffnung angeordnet sind und der Geräuschminderung dienen.

Aus der Druckschrift WO 2012/11 8452 A1 ist schliesslich ein Kugelhahneinsatz bekannt, der sich durch eine besondere Form des Eintrittsloches des flüssigen Mediums auszeichnet. Die gesamte Geometrie des Durchlaufloches des Einsatzes wird durch bestimmte und genau festgelegte Geometrieparameter definiert. Logarithmischer und linearer Durchfluss des flüssigen Mediums durch den Einsatz wird mit bestimmten gegenseitigen Verhältnissen zwischen den Werten der angeführten Geometrieparameter des Einsatzes mit der Drehrichtung des Einsatzes und mit der Anfangslage des Öffnens des Durchflusses des flüssigen Mediums durch den breiten oder engeren Teil des besonders geformten Eintrittsloches des flüssigen Mediums erreicht. Der Kugelhahneinsatz soll das Problem des linearen und logarithmischen Durchflusses durch den Kugelhahn auf sehr einfache Art und Weise lösen. Der Kugelhahneinsatz soll ebenso das Problem der Turbulenzen und damit verbundenen Vibrationen, und damit auch das Problem des Rauschens des Durchflusses des flüssigen Mediums durch den Kugelhahn lösen. Tatsächlich gibt es jedoch Winkelstellungen und Winkelstellungsbereiche der Kugel und damit des Kugelhahneinsatzes (siehe beispielsweise die Fig. 12 und 19 der Druckschrift), in denen das strömende Medium (am Austritt) an einer Kante entlang strömt, wodurch wieder erhebliche Turbulenzen erzeugt werden, die ja eigentlich vermieden werden sollten.

### DARSTELLUNG DER ERFINDUNG

Es ist daher eine Aufgabe der Erfindung, einen gattungsgemässen Regelhahn zu schaffen, welcher sich auf einfache Weise durch eine deutlich reduzierte Geräuschentwicklung auszeichnet.

Diese und andere Aufgaben werden durch die Merkmale des Anspruchs 1 gelöst.

Die Erfindung geht aus von einem Regelhahn mit einem Schliesselement, welches in einem Gehäuse zwischen einer Einlassseite und einer Auslassseite um eine Drehachse zwischen einer ersten Endstellung und einer zweiten Endstellung hin- und herdrehbar gelagert ist und einen senkrecht zur Drehachse durch das Schliesselement hindurch verlaufenden Durchlasskanal mit einer Einlassöffnung und einer Auslassöffnung aufweist, und welches in der ersten Endstellung die Einlassseite mit der Auslassseite strömungstechnisch verbindet, in der zweiten Endstellung die Einlassseite von der Auslassseite strömungstechnisch trennt, und beim Übergang von der zweiten Endstellung in die erste Endstellung mit einer charakteristischen Kennlinie einen zunehmenden Durchfluss eines Mediums erlaubt, wobei die charakteristische Kennlinie durch Form und Grösse der Auslassöffnung des Durchlasskanals bestimmt wird, die Einlassöffnung derart ausgebildet ist, dass auf der Einlassseite der freie Querschnitt für das in den Durchlasskanal einströmende Medium unabhängig ist von der Stellung des Schliesselements zwischen den beiden Endstellungen, und die Wände des Durchlasskanals zwischen der Einlassöffnung und der Auslassöffnung des Durchlasskanals stufen- und kantenfrei ausgebildet sind.

Der Übergang zwischen der ersten Endstellung und der zweiten Endstellung erfolgt durch eine Drehung des Schliesselements von 90° um die Drehachse des Regelhahns.

Die Einlassseite ist Teil einer quer zur Drehachse des Regelhahns durch das Gehäuse verlaufenden Durchgangsbohrung mit einem Innendurchmesser, wobei die Einlassöffnung des Durchlasskanals einem mit konstantem Krümmungsradius um die Drehachse gekrümmten, in radialer Richtung orientierten Langloch mit halbkreisförmigen Enden gleicht, dessen Höhe dem Innendurchmesser der Durchgangsbohrung entspricht, und das einen Krümmungswinkel von wenigstens 90° überstreicht.

Insbesondere ist die Auslassseite Teil der durch das Gehäuse verlaufenden Durchgangsbohrung ist, wobei die Auslassöffnung des Durchlasskanals eine gegenüber der Querschnittsfläche der Durchgangsbohrung reduzierte Öffnungsfläche aufweist.

Speziell umfasst die Öffnungsfläche der Auslassöffnung einen sich in Drehrichtung erstreckenden spaltförmigen ersten Teilbereich mit geringer Teilfläche und einen sich in axialer Richtung symmetrisch ausweitenden, sichelförmigen zweiten Teilbereich mit grosser Teilfläche, die in Drehrichtung hintereinander angeordnet sind und stetig ineinander übergehen.

Eine andere Ausgestaltung des Regelhahns nach der Erfindung ist dadurch gekennzeichnet, dass das Schliesselement kugelförmig ausgebildet ist.

Insbesondere ist das Schliesselement einstückig ausgebildet.

Vorzugsweise ist das Schliesselement zur Einlassseite und zur Auslassseite hin jeweils durch eine Dichtung gegen das Gehäuse des Regelhahns abgedichtet.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer teilweise geschnittenen Ansicht den Aufbau eines Regelhahns nach dem Stand der Technik, wie er aus der Druckschrift WO 01/33120 A1 bekannt ist;
- Fig. 2: in einer perspektivischen Seitenansicht das kugelförmige Schliesselement des Regelhahns aus Fig. 1 mit der speziell ausgebildeten Einlassöffnung;
- Fig. 3: in einer perspektivischen Seitenansicht das kugelförmige Schliesselement des Regelhahns aus Fig. 1 mit der kreisrunden Auslassöffnung und dem zylindrischen Durchlasskanal;
- Fig. 4: einen Längsschnitt durch einen Regelhahn gemäss einem Ausführungsbeispiel der vorliegenden Erfindung;
- Fig. 5: eine Seitenansicht des Regelhahns aus Fig. 4;
- Fig. 6: eine Schnittansicht durch den Regelhahn aus Fig. 5 in der Schnittebene A-A bei geschlossenem Hahn;
- Fig. 7: die zu Fig. 6 vergleichbare Schnittansicht bei halb geöffnetem Hahn (45°-Drehung);
- Fig. 8: die zu Fig. 6 vergleichbare Schnittansicht bei ganz geöffnetem Hahn (90°-Drehung);
- Fig. 9: eine in Strömungsrichtung orientierte Seitenansicht des Schliesselements aus Fig. 4 bei geschlossenem Hahn;
- Fig. 9a,b: verschiedene Schnitte des Schliesselements aus Fig. 9 in den Schnittebenen A-A und B-B;
- Fig. 10: eine in Strömungsrichtung orientierte Seitenansicht des Schliesselements aus Fig. 4 bei voll geöffnetem Hahn;
- Fig. 10a: einen Schnitt des Schliesselements aus Fig. 10 in der Schnittebene C-C;
- Fig. 11: eine Seitenansicht des Schliesselements gemäss Fig. 9, wobei zusätzlich gestrichelt die Durchgangsbohrung im Gehäuse angedeutet ist;
- Fig. 11a-d: verschiedene Zwischenzustände beim Öffnen des Hahns durch Drehen des Schliesselements; und
- Fig. 12: eine dreidimensionale Darstellung des Schliesselements, die etwa der in Fig. 11c wiedergegebenen Position entspricht.

### WEGE ZUR AUSFÜHRUNG DER ERFINDUNG

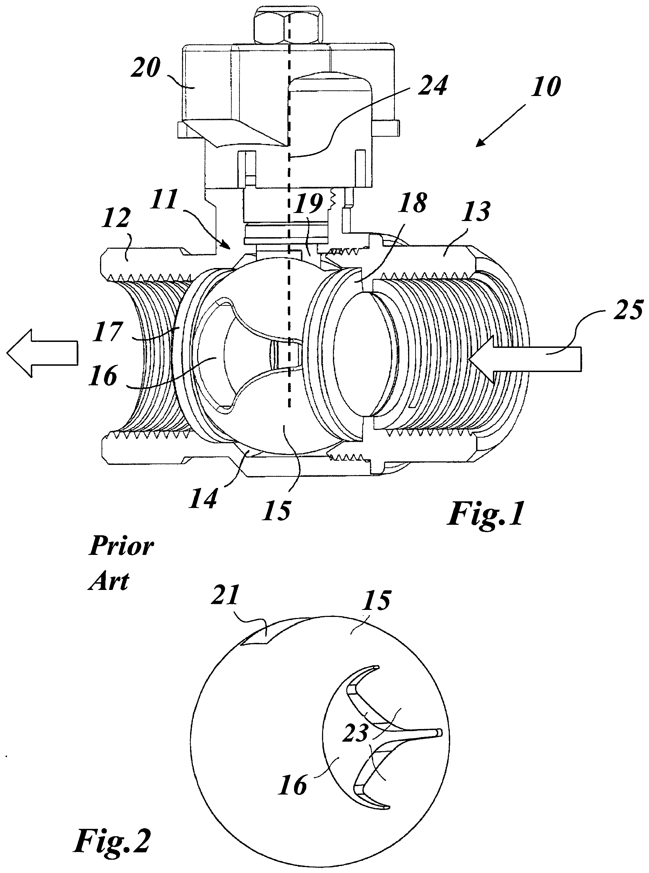

Die Fig. 1-3 zeigen einen Regelhahn 10, wie er aus dem Stand der Technik (der Druckschrift WO 01 /33120 A1) bekannt ist. Der bekannte Regelhahn 10 umfasst ein Gehäuse 11, an welchem einander gegenüberliegend und miteinander fluchtend zwei Anschlussstutzen 12 und 13 ausgebildet sind. Die beiden mit einem Innengewinde ausgestatteten Anschlussstutzen 12 und 13 definieren eine Durchgangsbohrung durch das Gehäuse 11, die durch einen in der Mitte angeordneten grösseren Absperrraum 14 geht. In dem Absperrraum 14 ist ein kugelförmiges Schliesselement 15 um eine Drehachse 24 drehbar gelagert, die senkrecht zur Durchgangsbohrung orientiert ist.

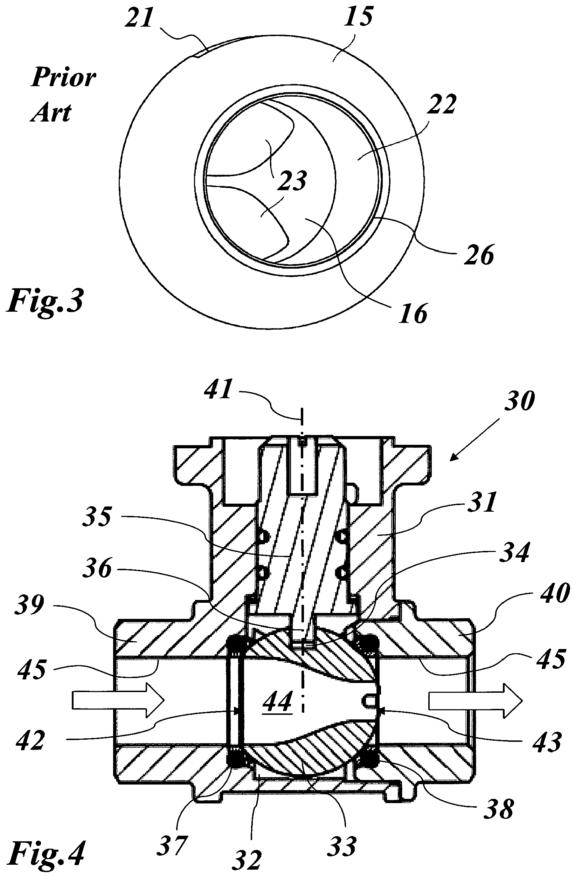

Das Schliesselement 15 weist einen Durchlasskanal 22 auf (Fig. 3), der auf der Einlassseite (Anschlussstutzen 13) eine speziell geformte Einlassöffnung 16 und auf der Auslassseite (Anschlussstutzen 12) eine kreisrunde Auslassöffnung 26 hat. Auf der Oberseite des Schliesselements 15 ist eine Nut 21 eingelassen, in die eine Betätigungsvorrichtung 20 mit einem entsprechend geformten Zapfen 19 eingreift das Schliesselement 15 ist gegen die Anschlussstutzen 12 und 13 jeweils mit einer Dichtung 17 beziehungsweise 18 abgedichtet.

Die spezielle Form der Einlassöffnung 16 wird durch zwei symmetrisch zu einer Mittelebene liegenden Vorsprünge 23 bestimmt. Die Einlassöffnung 16 hat dadurch einen beim Öffnen des Regelhahns 10 wirksamen spaltförmigen Anfangsbereich (auf der rechten Seite in Fig. 2), der sich in der Öffnungsmitte erweitert zu einem beidseitig ausladenden sichelförmigen Endbereich (auf der linken Seite in Fig. 2). Diese Form der Einlassöffnung hat eine bestimmte (gleichprozentige) Öffnungscharakteristik des Hahns zur Folge.

Man erkennt in Fig. 1-3, dass sich der Öffnungsquerschnitt im Schliesselement 15 hinter der Einlassöffnung 16 schlagartig auf den Kreisquerschnitt des Durchlasskanals 22 erweitert, was bei dem durch die Einlassöffnung 16 in den Durchlasskanal 22 einströmenden Medium zwangsläufig zu extremen Verwirbelungen hinter den Kanten führt, die erhebliche Geräusche nach sich ziehen. Eine weitere Quelle der Geräuschbildung ergibt sich dadurch, dass - abgesehen von der vollständig geöffneten Endstellung des Hahns - die Auslassöffnung 26 mit dem Öffnungsquerschnitt des Durchlasskanals nicht fluchtet, sodass ein Abschnitt der Kante der Auslassöffnung 26 in die Strömung der Durchgangsbohrung hineinragt und Verwirbelungen verursacht.

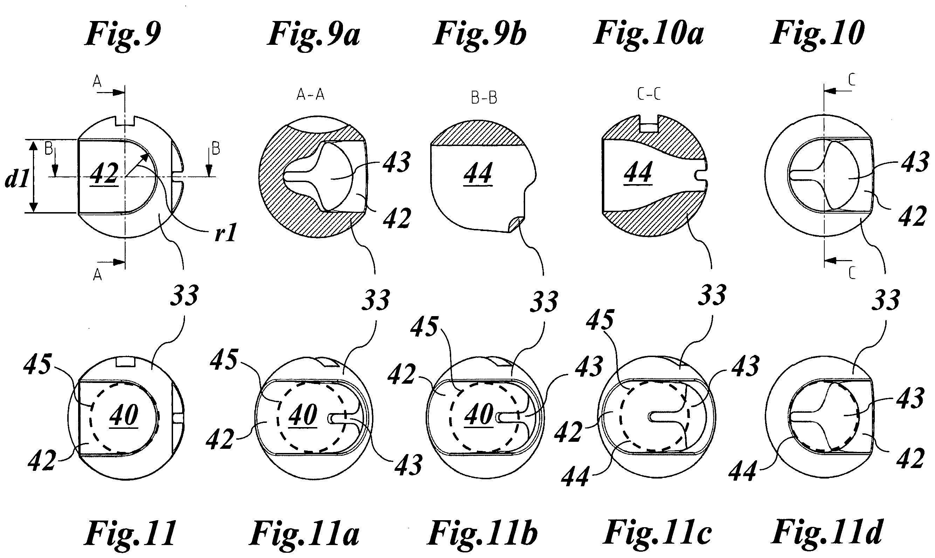

Die vorliegende Erfindung schafft hier durch verschiedene Massnahmen Abhilfe, wie sie am Ausführungsbeispiel erkennbar sind, das in Fig. 4 im Längsschnitt wiedergegeben ist. Der beispielhafte Regelhahn 30 aus Fig. 4-8 umfasst ein Gehäuse 31 mit einem seitlich angesetzten Einlassstutzen 39, einem gegenüberliegenden und mit dem Einlassstutzen fluchtenden Auslassstutzen 40 und einem zwischen beiden angeordneten Absperrraum 32, der das (in diesem Beispiel kugelförmige) Schliesselement 33 aufnimmt. Das Schliesselement 33 ist mittels entsprechender ringförmiger Dichtungen 37 und 38 gegen Ein- und Auslassstutzen 39 bzw. 40 abgedichtet. Es ist um eine Drehachse 41 drehbar, die senkrecht zur durch die Stutzen 39, 40 definierten Durchgangsbohrung 45 (Fig. 11) orientiert ist. Betätigt (gedreht) wird das Schliesselement 33 mittels eines drehbaren Betätigungselements 35, das mit einem Zapfen 36 in eine Nut 34auf der Oberseite des Schliesselements 33 eingreift.

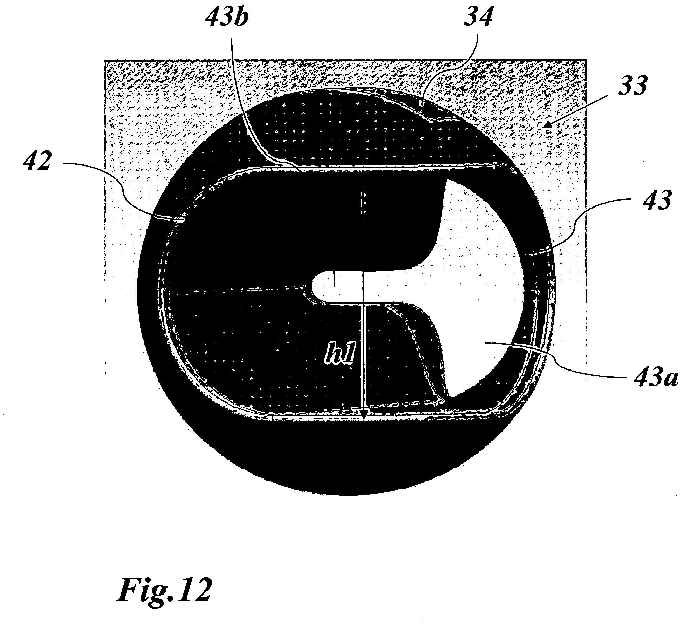

Wie am besten aus der Fig. 12 ersichtlich ist, hat das kugelförmige Schliesselement 33 einen durch die Kugel hindurchgehenden Durchlasskanal 44, der an seinen Enden mit einer Einlassöffnung 42 und einer Auslassöffnung 43 in die Umgebung mündet. Die Durchlasscharakteristik des Kugelhahns wird - anders als beim Hahn der Fig. 1 - im wesentlichen durch die Grösse und Randkontur der Auslassöffnung 43 bestimmt, die deutlich kleiner ist als die Einlassöffnung 42. Um eine gleichprozentige Charakteristik auch im Anfangsbereich zu erreichen (Fig. 11a-c), hat die Einlassöffnung 43 ebenfalls einen Spaltbereich 43b und einen Sichelbereich 43a, die in der Öffnungsmitte ineinander übergehen.

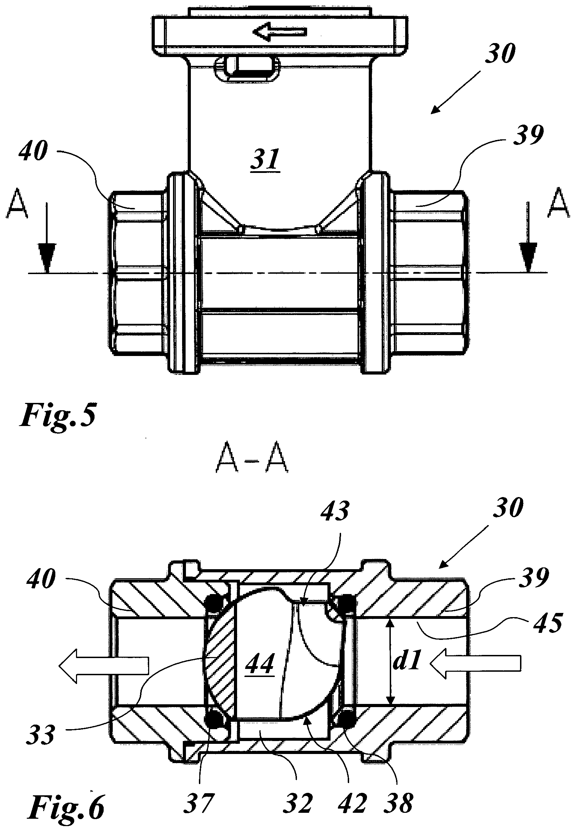

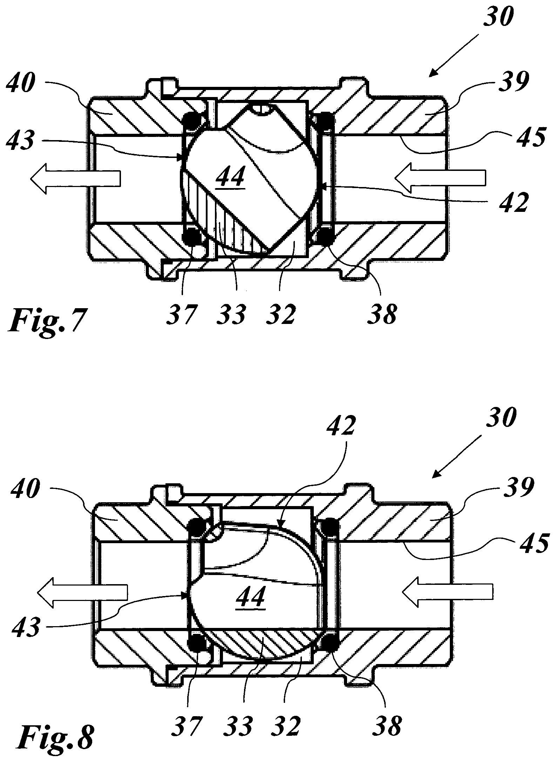

Die Einlassöffnung 42 ist von den Abmessungen her an die durch die Stutzen 39 und 40 definierte Durchgangsbohrung 45 angepasst. Die Einlassöffnung 42 hat dazu die Form eines um die Drehachse 41 gebogenen Langloches, das eine konstante Höhe h1 aufweist (Fig. 12) und an den Enden jeweils durch einen Halbkreis mit dem Radius r1 begrenzt ist (Fig. 9). Wie man in Fig. 4 sieht, ist die Höhe h1 gleich dem Innendurchmesser d1 der Durchgangsbohrung (Fig. 6). Im gezeigten Ausführungsbeispiel hat der Regelhahn 30 zwei Endstellungen, die in Fig. 4 und 8 beziehungsweise in Fig. 6 zu sehen sind. In der in Fig. 6 gezeigten einen Endstellung ist der Regelhahn 30 abgesperrt; ein Durchfluss durch die Durchgangsbohrung 45 ist nicht möglich. In der in Fig. 4 bzw. 8 gezeigten anderen Endstellung ist der Regelhahn 30 vollständig geöffnet; der Durchfluss ist maximal und wird durch die Auslassöffnung 43 bestimmt.

Der Übergang zwischen den beiden Endstellungen erfolgt durch eine Drehung des Schliesselements 33 um die Drehachse 41 um 90°. Eine Zwischenstellung (Drehung um 45°) ist in Fig. 7 wiedergegeben. Die Einlassöffnung 42 ist nun gerade so ausgebildet bzw. die Länge des Langlochs so gewählt, dass in beiden Endstellungen der endseitig begrenzende Halbkreis des Langloches mit dem Rand der Durchgangsbohrung im Einlassstutzen 39 zusammenfällt (siehe Fig. 11 und 11d). Auf diese Weise wird sichergestellt, dass über den gesamten Schwenkbereich von 90° das Schliesselement 33 nicht störend mit einer Kante in die Durchgangsbohrung hineinragt und Verwirbelungen verursacht. Vielmehr ergibt sich ein weitgehend stetiger Übergang zwischen Einlassstutzen 39 und Schliesselement 33, der das strömende Medium nur gering beeinflusst.

Neben der Ausbildung der Auslassöffnung 43 als für die Durchlasscharakteristik des Regelhahns 30 bestimmende Öffnung und der Ausbildung der Einlassöffnung 42 als im Schwenkbereich des Hahns nicht in die Strömung eingreifendes gekrümmtes Langloch trägt ein weiteres Merkmal dazu bei, die Geräuschbildung gering zu halten: Die Wände des Durchlasskanals 44 zwischen der Einlassöffnung 42 und der Auslassöffnung 43 des Durchlasskanals 44 sind stufen- und kantenfrei ausgebildet. Die Einlassöffnung 42 verjüngt sich stetig zur Auslassöffnung 43 hin, so dass Durchmessersprünge, Abstufungen sowie Knicke oder Kanten, die zur Wirbelbildung beitragen, vermieden werden. Diese gleichmässige Querschnittsveränderung im Verlaufe des Durchlasskanals ist in Fig. 12 besonders deutlich zu erkennen.

Das kugelförmige Schliesselement 33 ist im Beispiel einstückig ausgebildet. Es kann - je nach dem Medium, das durch den Hahn strömt - aus einem Metall, aus einer Keramik oder auch aus einem Kunststoff bestehen. Anstelle des kugelförmigen Schliesselements kann aber auch ein zylinderförmiges Schliesselement vorgesehen werden, das um die Zylinderachse gedreht wird. Desgleichen ist es denkbar, die Öffnung, welche die Charakteristik des Hahns bestimmt, anders auszugestalten, um eine andere Durchlasscharakteristik zu generieren.

### Bezugszeichenliste

- 10: Regelhahn
- 11: Gehäuse
- 12,13: Anschlussstutzen
- 14: Absperrraum
- 15: Schliesselement (Kugel)
- 16: Einlassöffnung
- 17,18: Dichtung
- 19: Zapfen
- 20: Betätigungsvorrichtung
- 21: Nut
- 22: Durchlasskanal
- 23: Vorsprung
- 24: Drehachse
- 25: Medium
- 26: Auslassöffnung
- 30: Regelhahn (Kugelhahn)
- 31: Gehäuse
- 32: Absperrraum
- 33: Schliesselement (Kugel)
- 34: Nut
- 35: Betätigungselement
- 36: Zapfen
- 37,38: Dichtung
- 39: Einlassstutzen
- 40: Auslassstutzen
- 41: Drehachse
- 42: Einlassöffnung (Durchlasskanal)
- 43: Auslassöffnung (Durchlasskanal)
- 43a: Sichelbereich
- 43b: Spaltbereich
- 44: Durchlasskanal
- 45: Durchgangsbohrung

## Patentansprüche

1. Regelhahn (30) mit einem Schliesselement (33), welches in einem Gehäuse (31) zwischen einer Einlassseite (39) und einer Auslassseite (40) um eine Drehachse (41) zwischen einer ersten Endstellung und einer zweiten Endstellung hin- und herdrehbar gelagert ist und einen senkrecht zur Drehachse (41) durch das Schliesselement (33) hindurch verlaufenden Durchlasskanal (44) mit einer Einlassöffnung (42) und einer Auslassöffnung (43) aufweist, und welches in der ersten Endstellung die Einlassseite (39) mit der Auslassseite (40) strömungstechnisch verbindet, in der zweiten Endstellung die Einlassseite (39) von der Auslassseite (40) strömungstechnisch trennt, und beim Übergang von der zweiten Endstellung in die erste Endstellung mit einer charakteristischen Kennlinie einen zunehmenden Durchfluss eines Mediums erlaubt, wobei die charakteristische Kennlinie durch Form und Grösse der Auslassöffnung (43) des Durchlasskanals (44) bestimmt wird, die Einlassöffnung (42) derart ausgebildet ist, dass auf der Einlassseite (39) der freie Querschnitt für das in den Durchlasskanal (44) einströmende Medium unabhängig ist von der Stellung des Schliesselements (33) zwischen den beiden Endstellungen, wobei der Übergang zwischen der ersten Endstellung und der zweiten Endstellung durch eine Drehung des Schliesselements (33) von 90° um die Drehachse (41) des Regelhahns (30) erfolgt und die Einlassseite (39) Teil einer quer zur Drehachse (41) des Regelhahns (30) durch das Gehäuse (31) verlaufenden Durchgangsbohrung (45) mit einem Innendurchmesser (d1) ist, **dadurch gekennzeichnet, dass** die Wände des Durchlasskanals (44) zwischen der Einlassöffnung (42) und der Auslassöffnung (43) des Durchlasskanals (44) stufen- und kantenfrei ausgebildet sind, und dass die Einlassöffnung (42) des Durchlasskanals (44) einem mit konstantem Krümmungsradius um die Drehachse (41) gekrümmten, in radialer Richtung orientierten Langloch mit halbkreisförmigen Enden gleicht, dessen Höhe (h1) dem Innendurchmesser (d1) der Durchgangsbohrung (45) entspricht, und das einen Krümmungswinkel von wenigstens 90° überstreicht.

2. Regelhahn nach Anspruch 1, **dadurch gekennzeichnet, dass** die Auslassseite (40) Teil der durch das Gehäuse (31) verlaufenden Durchgangsbohrung (45) ist, und dass die Auslassöffnung (43) des Durchlasskanals (44) eine gegenüber der Querschnittsfläche der Durchgangsbohrung (45) reduzierte Öffnungsfläche aufweist.

3. Regelhahn nach Anspruch 2, **dadurch gekennzeichnet, dass** die Öffnungsfläche der Auslassöffnung (43) einen sich in Drehrichtung erstreckenden spaltförmigen ersten Teilbereich (43b) mit geringer Teilfläche und einen sich in axialer Richtung symmetrisch ausweitenden, sichelförmigen zweiten Teilbereich (43a) mit grosser Teilfläche umfasst, die in Drehrichtung hintereinander angeordnet sind und stetig ineinander übergehen.

4. Regelhahn nach einem der Ansprüche 1 bis 3, **dadurch gekennzeichnet, dass** das Schliesselement (33) kugelförmig ausgebildet ist.

5. Regelhahn nach Anspruch 4, **dadurch gekennzeichnet, dass** das Schliesselement (33) einstückig ausgebildet ist.

6. Regelhahn nach Anspruch 4, **dadurch gekennzeichnet, dass** das Schliesselement (33) zur Einlassseite (39) und zur Auslassseite (40) hin jeweils durch eine Dichtung (37, 38) gegen das Gehäuse (31) des Regelhahns (30) abgedichtet ist.

## Claims

1. Regulating valve (30) having a closure element (33) which is mounted in a housing (31) between an inlet side (39) and an outlet side (40) in a manner rotatable back and forth about an axis of rotation (41) between a first end position and a second end position, and which has a passage duct (44) running through the closure element (33) perpendicularly with respect to the axis of rotation (41) and having an inlet opening (42) and an outlet opening (43), and which fluidically connects the inlet side (39) to the outlet side (40) in the first end position, fluidically separates the inlet side (39) from the outlet side (40) in the second end position, and upon transition from the second end position into the first end position, permits an increasing throughflow of a medium with a characteristic curve, wherein the characteristic curve is determined by the shape and size of the outlet opening (43) of the passage duct (44) and the inlet opening (42) is formed such that, on the inlet side (39), the free cross section for the medium flowing into the passage duct (44) is independent of the position of the closure element (33) between the two end positions, wherein the transition between the first end position and the second end position is realized by rotating the closure element (33) through 90° about the axis of rotation (41) of the regulating valve (30) and the inlet side (39) is part of a passage bore (45) which runs through the housing (31) transversely with respect to the axis of rotation (41) of the regulating valve (30) and which has an inner diameter (d1), **characterized in that**, between the inlet opening (42) and the outlet opening (43) of the passage duct (44), the walls of the passage duct (44) are of step- and edge-free form, and **in that** the inlet opening (42) of the passage duct (44) resembles a slot with semicircular ends, which is curved around the axis of rotation (41) with a constant radius of curvature and which is oriented in a radial direction and whose height (h1) corresponds to the inner diameter (d1) of the passage bore (45) and which covers an angle of curvature of at least 90°.

2. Regulating valve according to Claim 1, **characterized in that** the outlet side (40) is part of the passage bore (45) which runs through the housing (31), and **in that** the outlet opening (43) of the passage duct (44) has a reduced opening area in comparison with the cross-sectional area of the passage bore (45).

3. Regulating valve according to Claim 2, **characterized in that** the opening area of the outlet opening (43) comprises a slit-like first partial region (43b), which extends in the direction of rotation and which has a small partial area, and a sickle-shaped second partial region (43a), which widens symmetrically in an axial direction and which has a large partial area, said partial regions being arranged one behind the other in the direction of rotation and merging into one another in a continuous manner.

4. Regulating valve according to one of Claims 1 to 3, **characterized in that** the closure element (33) is of spherical form.

5. Regulating valve according to Claim 4, **characterized in that** the closure element (33) is of integral form.

6. Regulating valve according to Claim 4, **characterized in that** the closure element (33) is sealed off with respect to the housing (31) of the regulating valve (30) towards the inlet side (39) and towards the outlet side (40) in each case by a seal (37, 38).

## Revendications

1. Robinet de réglage (30) comprenant un élément de fermeture (33) qui est monté dans un boîtier (31) entre un côté entrée (39) et un côté sortie (40) de manière à pouvoir effectuer un mouvement rotatif alternatif sur un axe de rotation (41) entre une première position d'extrémité et une deuxième position d'extrémité et qui comporte un passage traversant (44) s'étendant perpendiculairement à l'axe de rotation (41) à travers l'élément de fermeture (33) et pourvu d'une ouverture d'entrée (42) et d'une ouverture de sortie (43) et qui relie de manière fluidique, dans la première position d'extrémité, le côté entrée (39) au côté sortie (40), qui sépare de manière fluidique le côté entrée (39) du côté sortie (40) dans la deuxième position d'extrémité et qui permet un débit croissant d'un milieu avec une courbe caractéristique lors d'une transition de la deuxième position d'extrémité à la première position d'extrémité, la courbe caractéristique étant définie par la forme et la dimension de l'ouverture de sortie (43) du passage traversant (44), l'ouverture d'entrée (42) étant conçue de manière à ce que, du côté entrée (39), la section transversale libre destinée au milieu s'écoulant dans le passage traversant (44) soit indépendante de la position de l'élément de fermeture (33) entre les deux positions d'extrémité, la transition entre la première position d'extrémité et la deuxième position d'extrémité s'effectuant par une rotation de l'élément de fermeture (33) de 90° sur l'axe de rotation (41) du robinet de réglage (30) et le côté entrée (39) faisant partie d'un perçage traversant (45) qui est pourvu d'un diamètre intérieur (d1) et qui s'étend à travers le boîtier (31) transversalement à l'axe de rotation (41) du robinet de réglage (30),
**caractérisé en ce que** les parois du passage traversant (44) entre l'ouverture d'entrée (42) et l'ouverture de sortie (43) du passage traversant (44) sont conçues pour être dépourvues de gradin et d'arête et **en ce que** l'ouverture d'entrée (42) du passage traversant (44) ressemble à un trou oblong qui est incurvé autour de l'axe de rotation (41) avec un rayon de courbure constant, qui est orienté dans une direction radiale, qui comporte des extrémités semi-circulaires, dont la hauteur (h1) correspond au diamètre intérieur (d1) du trou traversant (45) et qui balaye un angle de courbure d'au moins 90°.

2. Robinet de réglage selon la revendication 1, **caractérisé en ce que** le côté sortie (40) fait partie du trou traversant (45) qui s'étend à travers le boîtier (31) et **en ce que** l'ouverture de sortie (43) du passage traversant (44) comporte une aire d'ouverture réduite par rapport à la section transversale du trou traversant (45).

3. Robinet de réglage selon la revendication 2, **caractérisé en ce que** l'aire de l'ouverture de sortie (43) comporte une première zone (43b), d'aire relativement petite, en forme de fente qui s'étend dans le sens de rotation et une deuxième zone (43a), d'aire relativement grande, en forme de croissant qui s'élargit symétriquement dans la direction axiale, lesdites zones étant disposées l'une derrière l'autre dans le sens de rotation et se fondant constamment l'une dans l'autre.

4. Robinet de réglage selon l'une des revendications 1 à 3, **caractérisé en ce que** l'élément de fermeture (33) est conçu pour avoir une forme sphérique.

5. Robinet de réglage selon la revendication 4, **caractérisé en ce que** l'élément de fermeture (33) est conçu d'une seule pièce.

6. Robinet de réglage selon la revendication 4, **caractérisé en ce que** l'élément de fermeture (33) est rendu étanche du côté entrée (39) et du côté sortie (40) par rapport au boîtier (31) du robinet de réglage (30) à chaque fois par une garniture d'étanchéité (37, 38) .
